# EUROPÄISCHE PATENTANMELDUNG

(11) **EP 3 910 126 A1**
(43) Veröffentlichungstag der Anmeldung: **17.11.2021**
(21) Anmeldenummer: 20000394.5
(22) Anmeldetag: 02.11.2020
(51) Int. Cl.: E04D 3/36, F16B 5/02, F16B 2/00

(54) **ABSTANDHALTER ZUR MONTAGE VON KUNSTSTOFFPROFILPLATTEN MIT REIBFLÄCHE**

(30) Priorität: 12.05.2020 EP 20000182
(71) Anmelder: Brinkhus Kunststoffverarbeitung GmbH, 37115 Duderstadt (DE)
(72) Erfinder: Die Erfindernennung liegt noch nicht vor

(57) **Zusammenfassung**

Um die Montage von Kunststoffprofilplatten mit Abstandhaltern, die in der Tiefe gewindeförmig ausgeformten Auflageflächen aufweisen wird beansprucht, solche Abstandhalter unterhalb des Gewindes der Abstandhalter mit einer Reibfläche zu versehen, sodass bei der Montage mittels Rotation die Kunststoffprofilplatte derart erwärmt wird, dass das zur Montage notwendige Drehmoment sowie die Montagezeit abgesenkt werden kann. Eingesetzt werden solche Abstandhalter zur Befestigung von Dach- oder Fassadenverkleidungen.

## Beschreibung

Der Erfindung liegt die Aufgabe zugrunde, Abstandhalter zur Montage von Kunststoffprofilplatten mit einer in der Tiefe gewindeförmig ausgeformten Auflagefläche zur Verfügung zu stellen, die eine verbesserte Verarbeitung ermöglicht.

Gelöst wurde die Aufgabe dadurch, dass unterhalb des Gewindes der Abstandhalter eine Reibfläche positioniert ist, die bei der Montage mittels Rotation die Kunststoffprofilplatte derart erwärmt, dass das zur Montage notwendige Drehmoment sowie die Montagezeit abgesenkt werden kann.

Eingesetzt werden solche Abstandhalter zur Befestigung von Dach- oder Fassadenverkleidungen. Die hierfür eingesetzten Kunststoffplatten werden mittels Schrauben auf dem Untergrund aus Holz- oder Blechprofilen befestigt. Zur Montage können z. B. Abstandhalter zwischen den Platten und dem Untergrund positioniert werden, um eine Deformation der Platten beim Verschrauben zu vermeiden, die in der Regel zu Undichtigkeiten führen.

Aus DE 10 2009 038 119 A1 ist bekannt, dass sich Abstandhalter von Oben durch die Bohrung durchschieben lassen, wenn radial schwenkbare Segmente nach der Positionierung für die notwendige Auflagefläche sorgen. Allerdings ist dieser Stand der Technik aufgrund der aufwendigen Konstruktion der schwenkbaren Bereiche sehr kostenintensiv, zudem erweisen sich die einseitig partiell schwenkbaren Bereiche als funktionsverlustige Schwachstellen.

Aus EP000002662506A3 ist bereits bekannt, dass sich Abstandhalter von Oben durch die Bohrung mittels Rotation positionieren lassen, wenn die Auflagefläche als Gewinde ausgeführt ist. Allerdings muss hierbei in die Kunststoffprofilplatte ein Gewinde geschnitten werden, weshalb ein hohes Drehmoment aufgebracht werden muss und die Gefahr besteht, dass die als Auflagefläche verwendeten Gewindeflanken erodieren.

Es hat sich überraschenderweise herausgestellt, dass die notwendige Fixierung der Platten mit den erfindungsgemäßen Abstandhaltern durch Positionierung von Oben durch die Bohrung in den Kunststoffprofilplatten mittels rotatorischer Bewegung mit geringem Drehmoment und geringem Verschleiß der Gewindeflanken erfolgen kann, wenn unterhalb des Gewindes eine Reibfläche positioniert ist. Durch die Rotation des Abstandhalters währen der Montage wird die Kunststoffprofilplatte erwärmt, sodass das Gewinde mit geringem Drehmoment in die Kunststoffprofilplatte geschnitten werden kann.

Es hat sich zur Erwärmung der Kunststoffprofilplatte als vorteilhaft herausgestellt, dass die Oberflächenrauigkeit in der Reibfläche des Abstandhalters mindestens 1,2 µm beträgt. Die Ursache für dieses Verhalten ist noch nicht geklärt.

Ebenso hat sich als vorteilhaft ein Reibwert zwischen der Reibfläche des Abstandhalters und der Kunststoffprofilplatte von mindestens 0,8 herausgestellt, wobei der Reibspalt 0,05 -0,10 mm und der Anlagedruck zwischen Abstandshalter und Kunststoffprofilplatte kleiner 5 N/mm² beträgt.

Der Reibwert kann durch die Wahl des Werkstoffs zur Herstellung des Abstandhalters eingestellt werden, wobei dieser besonders hoch ist, wenn Abstandhalter und Kunststoffprofilplatten aus demselben Werkstoff hergestellt werden. Die Gewindeflanken des Abstandhalters erweichen in diesem Falle nicht in gleicher Weise wie die Kunststoffprofilplatte, da diese bereits durch Reibung mit der Reibfläche des Abstandhalters erwärmt wird und die Gewindeflanken im Anschluss mit geringem Drehmoment uns somit geringer Reiberwärmung durch das erweichte Plattenmaterial schneidet.

Zur Einstellung eines hohen Reibwertes und somit einer schnellen Erwärmung des Plattenmaterials ist es vorteilhaft, amorphe Thermoplaste einzusetzen, da teilkristalline Kunststoffe geringere Reibwerte verursachen.

Trotz der geringem Erwärmung der Gewindeflanken kann es bei der Verbauung von Kunststoffprofilplatten mit Wandstärken oberhalb von 1,0 mm vorteilhaft sein, die erfindungsgemäßen Abstandshalter aus einem Werkstoff mit einer hohen Wärmeformbeständigkeit zu fertigen. Die Ursache hierfür ist die bei dickwandigen Platten höhere Wärmeentwicklung in der Reibfläche zu sehen, zudem ist die Verweilzeit der Gewindegänge beim Durchschneiden der Kunststoffprofilplatte abhängig von der Plattenstärke.

Zur Verbauung von wärmeformbeständigen Kunststoffprofilplatten kann es vorteilhaft sein, in der Reibfläche polymere Werkstoffe mit besonders hohem Reibwert und hoher Wärmeformbeständigkeit einzusetzen. Aufgrund des Schmelzbereichs oberhalb von 200 °C, der Verschleißbeständigkeit und der Transparenz empfehlen sich hierfür thermoplastische Polyurethane.

Das Polyurethan lässt sich als Lack, alternativ mittels 2K-Spritzguss applizieren. Bei geeigneter Wahl kann der Abstandhalter mit der Reibschicht transparent ausgeführt werden, wobei in diesem Falle die Kristallite im thermoplastischen Polyurethan kleiner als 200 nm sein müssen.

Folgende vorteilhafte Ausführungen des erfindungsgemäßen Abstandhalters sollen genannt werden:
Beispiel 1:
Abstandhalter zur Verbauung von 0,8 mm starken PVC-Profilplatten:

| | |
|---|---|
| Werkstoff Abstandhalter: | PVC |
| Werkstoff Reibschicht: | PMMA |
| Reibwert _{(20°C, 0,02m/s)}: | 0,95 |
| Stärke der Reibschicht: | 1,2 mm |

Beispiel 2:
Abstandhalter zur Verbauung von 1,2 mm starken PC-Profilplatten:

| | |
|---|---|
| Werkstoff Abstandhalter: | PC |
| Werkstoff Reibschicht: | PC |
| Reibwert _{(20°C, 0,02m/s)}: | 0,90 |
| Stärke der Reibschicht: | 2 mm |

Beispiel 3:
Abstandhalter zur Verbauung von 2,5 mm starken PMMA-Profilplatten:

| | |
|---|---|
| Werkstoff Abstandhalter: | PC |
| Werkstoff Reibschicht: | TPU |
| Reibwert _{(20°C, 0,02m/s)}: | 1,05 |
| Stärke der Reibschicht: | 4,0 mm |

## Patentansprüche

1. Abstandhalter zur Montage von Kunststoffprofilplatten mit einer in der Tiefe gewindeförmig ausgeformten Auflagefläche, der mittels Rotation durch eine Bohrung zwischen Kunststoffprofilplatte und Untergrund positioniert werden kann, **dadurch gekennzeichnet, dass** unterhalb des Gewindes des Abstandhalters eine Reibfläche angeordnet ist.

2. Abstandhalter nach Anspruch 1, **dadurch gekennzeichnet, dass** die Oberflächenrauigkeit der Reibfläche mindestens 1,2 µm beträgt.

3. Abstandhalter nach Anspruch 1 oder 2, **dadurch gekennzeichnet, dass** die Stärke der Reibfläche mindestens dem 1,5-fachen Plattenstärke entspricht.

4. Abstandhalter nach einem der Ansprüche 1 bis 3, **dadurch gekennzeichnet, dass** und der Reibwert zwischen Platte und Abstandhalter mindestens 0,8 beträgt.

5. Abstandhalter nach einem der vorherigen Ansprüchen, **dadurch gekennzeichnet, dass** die Erweichungstemperatur im Bereich der Reibfläche des Abstandhalters mindestens 100 °C beträgt.

6. Abstandhalter nach einem der Ansprüche 1 bis 4, **dadurch gekennzeichnet, dass** die Erweichungstemperatur im Bereich der Reibfläche des Abstandhalters mindestens 150 °C beträgt.

7. Abstandhalter nach einem der vorherigen Ansprüchen, **dadurch gekennzeichnet, dass** zur Herstellung des Abstandhalters und zur Herstellung der Kunststoffprofilplatten das gleiche Polymer eingesetzt wird.

8. Abstandhalter nach einem der vorherigen Ansprüchen, **dadurch gekennzeichnet, dass** zur Herstellung des Abstandhalters ein amorphes Polymer eingesetzt wird.

9. Abstandhalter nach einem der Ansprüche 1 bis 6, **dadurch gekennzeichnet, dass** für die Reibfläche und für den Abstandhalterkorpus unterschiedliche Polymere eingesetzt werden.

10. Abstandhalter nach Anspruch 8, **dadurch gekennzeichnet, dass** für die Reibfläche Polyurethan eingesetzt wird.

11. Abstandhalter einem der Ansprüche 8 und 9, **dadurch gekennzeichnet, dass** der Materialverbund Licht zwischen 400 nm und 800 nm maximal zu 20 % absorbiert.
